(19)

**Europäisches Patentamt**
**European Patent Office**
**Office européen des brevets**

(11) **EP 4 737 491 A1**

(12) **EUROPEAN PATENT APPLICATION**
published in accordance with Art. 153(4) EPC

(43) Date of publication:
06.05.2026 Bulletin 2026/19

(21) Application number: 24831561.6

(22) Date of filing: 31.05.2024

(51) International Patent Classification (IPC):
*C08F 214/06* (2006.01)     *C08F 218/08* (2006.01)
*C08K 5/10* (2006.01)     *C08L 27/06* (2006.01)
*D06N 3/06* (2006.01)

(52) Cooperative Patent Classification (CPC):
C08F 214/06; C08F 218/08; C08K 5/10;
C08L 27/06; D06N 3/06

(86) International application number:
PCT/JP2024/020019

(87) International publication number:
WO 2025/004691 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.06.2023  JP 2023105601
01.04.2024  JP 2024058761

(71) Applicant: Tosoh Corporation
Yamaguchi 746-8501 (JP)

(72) Inventors:
• WATANABE, Kazunori
  Yokkaichi-shi, Mie 510-8540 (JP)
• YAHAGI, Yuta
  Yokkaichi-shi, Mie 510-8540 (JP)
• BINGO, Shota
  Yokkaichi-shi, Mie 510-8540 (JP)

(74) Representative: Novagraaf International SA
Chemin de l'Echo 3
1213 Onex, Geneva (CH)

(54) **VINYL CHLORIDE-BASED RESIN PASTE FOR SYNTHETIC LEATHER**

(57)     Provided is a polyvinyl chloride paste resin for synthetic leather, which is capable of providing synthetic leather with excellent flexibility and touch.

The polyvinyl chloride paste resin is a vinyl chloride-vinyl acetate copolymer paste resin having a vinyl acetate residue unit content of 3 to 15 wt% and an average polymerization degree of 900 to 2,200. The synthetic leather contains such a polyvinyl chloride paste resin as a constituent material of a skin layer and/or a foam layer.

EP 4 737 491 A1

**Description**

TECHNICAL FIELD

The present invention relates to a polyvinyl chloride paste resin having properties suitable for synthetic leather, and more particularly relates to a polyvinyl chloride paste resin capable of providing synthetic leather with excellent flexibility and touch by having a specific amount of vinyl acetate residue unit and a specific average polymerization degree and to synthetic leather containing such a polyvinyl chloride paste resin.

BACKGROUND ART

Polyvinyl chloride paste resins (hereinafter sometimes abbreviated as paste PVC) are commonly used for various formed products such as wallpaper, tile carpets, gloves and the like by kneading paste PVC with plasticizers, fillers, stabilizers or other ingredients and forming the thus-prepared polyvinyl chloride paste sols (hereinafter sometimes abbreviated as PVC paste sols) by various forming processes.

Furthermore, synthetic leather made from polyvinyl chloride with high mechanical strength and excellent abrasion resistance, chemical resistance and oil resistance has been proposed for applications in a wide range of fields including automotive interiors, furniture, bags and pouches, footwear, clothing and stationery etc. (see, for example, Patent Document 1). The touch of such synthetic leather can be improved with the addition of a plasticizer. Depending on the amount of the plasticizer added, however, there are seen cases where the plasticizer not only imparts flexibility to the synthetic leather but also affects the touch of the synthetic leather to cause a problem of stickiness or the like.

To cope with this problem, the use of a specific plasticizer has been proposed (see, for example, Patent Document 2).

PRIOR ART DOCUMENTS

PATENT DOCUMENTS

Patent Document 1: JP-A-H6-116875
Patent Document 2: JP-A-H6-2281

DISCLOSURE OF INVENTION

TECHNICAL PROBLEM

However, the proposals of Patent Documents 1 and 2 are directed to synthetic leather and compositions thereof and give no consideration to paste PVC for synthetic leather. The consideration of plasticizers alone is limited in effectiveness.

It is accordingly an object of the present invention to provide paste PVC suitable for synthetic leather, which is capable of providing synthetic leather with excellent flexibility and touch, and to provide synthetic leather containing such paste PVC.

SOLUTION TO PROBLEM

As a result of extensive studies made on the above problem, the present inventors have found that a vinyl chloride-vinyl acetate copolymer paste resin containing a specific amount of vinyl acetate residue unit and having a specific average polymerization degree can be used as paste PVC suitable for providing synthetic leather with excellent flexibility and touch, and thus have accomplished the present invention.

That is, the present invention includes the following aspects [1] to [8].

[1] A polyvinyl chloride paste resin for synthetic leather, which is a vinyl chloride-vinyl acetate copolymer paste resin having a vinyl acetate residue unit content of 3 to 15 wt% and an average polymerization degree of 900 to 2,200.

[2] The polyvinyl chloride paste resin for synthetic leather according to [1], wherein: the vinyl acetate residue unit content shows a continuous distribution with a single local maximum and a mode of 1 to 30 wt%; and a primary particle size of the paste resin at a maximum peak of cumulative weight frequency is 0.1 to 5 $\mu$m.

[3] Synthetic leather containing a vinyl chloride-vinyl acetate copolymer paste resin having a vinyl acetate residue unit content of 3 to 15 wt% and an average polymerization degree of 900 to 2,200.

[4] The synthetic leather according to [3], comprising at least a skin layer, a foam layer and a base fabric, wherein the skin layer and/or the foam layer contains the vinyl chloride-vinyl acetate copolymer paste resin having a vinyl acetate residue unit content of 3 to 15 wt% and an average polymerization degree of 900 to 2,200.

[5] The synthetic leather according to [4], wherein the skin layer contains 40 to 100 parts by weight of a plasticizer per 100 parts by weight of the vinyl chloride-vinyl acetate copolymer paste resin having a vinyl acetate residue unit content of 3 to 15 wt% and an average polymerization degree of 900 to 2,200.

[6] The synthetic leather according to [4] or [5], wherein the foam layer contains 50 to 150 parts by weight of a plasticizer per 100 parts by weight of the vinyl chloride-vinyl acetate copolymer paste resin having a vinyl acetate residue unit content of 3 to 15 wt% and an average polymerization degree of 900 to 2,200.

[7] The synthetic leather according to [5] or [6], wherein the plasticizer is at least one type selected from the group consisting of diisononyl phthalate, bis(2-ethylhexyl) terephthalate, diisodecyl phthalate, dibutyl phthalate, (2-ethylhexyl) adipate, diisononyl adipate, tri(2-ethylhexyl) trimellitate and triisodecyl trimellitate.

[8] A method for producing synthetic leather, comprising laminating a skin layer, a foam layer and a base fabric, wherein the skin layer and the foam layer are formed by paste processing in which a polyvinyl chloride paste sol for formation of the skin layer and/or a polyvinyl chloride paste sol for formation of the foam layer contains a vinyl chloride-vinyl acetate copolymer paste sol having a vinyl acetate residue unit content of 3 to 15 wt% and an average polymerization degree of 900 to 2,200 and a plasticizer.

ADVANTAGEOUS EFFECTS OF INVENTION

Synthetic leather containing the paste PVC according to the present invention is excellent in flexibility and touch and is expected to find applications in a wide range of fields including automotive interiors, furniture, bags and pouches, footwear, clothing, stationery and the like.

DESCRIPTION OF EMBODIMENTS

Hereinafter, the present invention will be described in detail below.

The paste PVC for synthetic leather according to the present invention is a paste resin of vinyl chloride-vinyl acetate copolymer containing 3 to 15 wt% of a vinyl acetate residue unit and having an average polymerization degree of 900 to 2,200. In the vinyl chloride-vinyl acetate copolymer paste resin, the content of the vinyl acetate residue unit is 3 to 15 wt% (that is, the content of the vinyl acetate residue unit is equivalent to 3 to 15 parts by weight per 100 parts by weight of the vinyl chloride-vinyl acetate copolymer). In particular, with a view to imparting excellent flexibility to synthetic leather, it is preferable that the content of the vinyl acetate residue unit is 7 to 12 wt% (that is, the content of the vinyl acetate residue unit is equivalent to 7 to 12 parts by weight per 100 parts by weight of the vinyl chloride-vinyl acetate copolymer). When the vinyl acetate residue unit content is less than 3 wt%, the synthetic leather produced is low in flexibility. When the vinyl acetate residue unit content exceeds 15 wt%, on the other hand, the processability is low due to a large change in viscosity with time when used as a PVC paste sol for production of synthetic leather.

Further, the average polymerization degree of the vinyl chloride-vinyl acetate copolymer paste resin is 900 to 2,200. In particular, with a view to providing excellent synthetic leather, it is preferable that the average polymerization degree is 1,000 to 2,000. When the average polymerization degree is less than 900, the synthetic leather produced is low in mechanical strength. On the other hand, when the average polymerization degree exceeds 2,200, the processability for production of synthetic leather is low. Here, the average polymerization degree can be determined by, for example, the method in accordance with JIS K6721.

As the paste PVC for synthetic leather according to the present invention, which is excellent in showing a small change in viscosity over time when used as a PVC paste sol and imparting high mechanical strength to synthetic leather, preferred is the vinyl chloride-vinyl acetate copolymer in which the vinyl acetate residue unit content shows a continuous distribution with a single local maximum and a mode of 1 to 30 wt%. The distribution measurement of the vinyl acetate residue unit content can be conducted by, for example, measuring the concentration of a component separated in units of vinyl acetate residue by the 2D-HPLC or liquid chromatography gradient-elution method using an evaporative light scattering detector and obtaining a distribution of the vinyl acetate residue unit content. Here, a continuous distribution of the vinyl acetate residue unit content with a single local maximum and a mode value of 1 to 30 wt% represents a composition distribution of the vinyl acetate residue unit in the vinyl chloride-vinyl acetate copolymer and further represents uniformity of the composition distribution. A narrower distribution range of the vinyl acetate residue unit content with a smaller number of local maxima and a stronger intensity of local maxima means higher uniformity.

The paste PVC for synthetic leather according to the present invention is a polyvinyl chloride paste resin and thus is in the form of an agglomerate of primary particles of the vinyl chloride-vinyl acetate copolymer. A primary particle size of the vinyl chloride-vinyl acetate copolymer at a maximum peak of cumulative weight frequency is preferably 0.1 to 5 $\mu$m,

more preferably 0.5 to 3.0 μm, still more preferably 1.0 to 2.0 μm, with a view to showing a small change in viscosity with time when used as a PVC paste sol and achieving excellent processability suitable for production of synthetic leather.

The vinyl chloride-vinyl acetate copolymer paste resin constituting the paste PVC for synthetic leather according to the present invention can be a vinyl chloride-vinyl acetate copolymer generally known as suitable for paste processing. The vinyl chloride-vinyl acetate copolymer paste resin may be any vinyl chloride-vinyl acetate copolymer paste resin produced by polymerizing vinyl chloride monomer with vinyl acetate monomer by e.g. emulsion polymerization process, micro-suspension polymerization process, seeded emulsion polymerization process, seeded micro-suspension polymerization process or the like. The vinyl chloride-vinyl acetate copolymer paste resin may be a commercially available product.

The paste PVC for synthetic leather according to the present invention is capable of providing synthetic leather with excellent flexibility and touch. As an example of such synthetic leather, synthetic leather having at least a skin layer, a foam layer and a base fabric may be mentioned. Among other, preferred is synthetic leather having a laminated structure formed with a base fabric as a substrate, a foam layer in an intermediate part and a skin layer on an outermost surface to achieve excellent touch and design property. The paste PVC for synthetic leather according to the present invention can be used as a constituent material of the skin layer and/or the foam layer.

In the case where the paste PVC for synthetic leather according to present invention is used for the skin layer, the skin layer preferably contains 40 to 100 parts by weight of a plasticizer per 100 parts by weight of the vinyl chloride-vinyl acetate copolymer paste resin to achieve particularly excellent flexibility without quality and hygiene problems such as bleed-out. The amount of the plasticizer contained is more preferably 50 to 90 parts by weight, still more preferably 50 to 80 parts by weight. The plasticizer may be a type generally known as a plasticizer for polyvinyl chlorides. With a view to obtaining synthetic leather with good balance between flexibility, permanent elongation and mechanical strength, the plasticizer is preferably at least one type selected from the group consisting of diisononyl phthalate, bis(2-ethylhexyl) terephthalate, diisodecyl phthalate, dibutyl phthalate, (2-ethylhexyl) adipate, diisononyl adipate, tri(2-ethylhexyl) trimellitate and triisodecyl trimellitate. The plasticizer is more preferably diisononyl phthalate (hereinafter sometimes referred to as DINP) with a view to obtaining the synthetic leather with extremely excellent flexibility.

The paste PVC, when used for the skin layer, may be blended with other ingredients such as a pigment, a diluent, an inorganic filler, a heat stabilizer, a viscosity modifier, a coloring agent and a flame retardant. Examples of the inorganic filler include: calcium carbonates such as precipitated calcium carbonate, heavy calcium carbonate and ultra fine precipitated calcium carbonate; magnesium carbonate; silicates such as silica, talc, diatomite, clay and mica; aluminum hydroxide; and alumina. Examples of the heat stabilizer include: metal soaps such as magnesium stearate, aluminum stearate, calcium stearate, barium stearate, zinc stearate, calcium laurate, barium laurate and zinc laurate; metal salts such as sodium, zinc and barium salts of phenols and naphthols; organic tin compounds such as dibutyltin dilaurate and dibutyltin maleate; and phosphites such as diethyl phosphite, dibutyl phosphite, dioctyl phosphite, diphenyl isodecyl phosphite, tricresyl phosphite, triphenyl phosphite, tris(nonylphenyl) phosphite and triisooctyl phosphite. Examples of the viscosity modifier and of the diluent include: solvents such as xylene, solvent naphtha, mineral spirit, diisobutyl ketone and butyl acetate; and adequate surfactants. Examples of the flame retardant include antimony trioxide, red phosphorus, zinc borate, organic bromide, chlorinated paraffin and the like. Examples of the coloring agent include aniline blue, phtalocyanine green, chrome yellow, titanium oxide, carbon black and the like.

The skin layer may be formed with various patterns, such as lattice pattern, check pattern, grain pattern, diamond pattern, heart pattern, clover pattern, spade pattern, cow pattern, lizard pattern, snake pattern, crocodile pattern, tiger pattern and leopard pattern, to achieve improved design property and texture. Further, the skin layer may be subjected to surface treatment with enamel, a glitter, a brightener or the like.

In the case where the paste PVC for synthetic leather according to the present invention is used for the foam layer, the foam layer preferably contains 50 to 150 parts by weight of a plasticizer per 100 parts by weight of the vinyl chloride-vinyl acetate copolymer paste resin to achieve particularly excellent flexibility without quality and hygiene problems such as bleed-out. The amount of the plasticizer contained is more preferably 70 to 130 parts by weight, still more preferably 90 to 110 parts by weight. Examples of the plasticizer are the same as those described above.

In the case where the paste PVC for synthetic leather according to the present invention is used for the foam layer, a foaming agent is preferably used in an amount of 2 to 7 parts by weight, more preferably 3 to 6 parts by weight, still more preferably 4 to 6 parts by weight, per 100 parts by weight of the vinyl chloride-vinyl acetate copolymer paste resin. The foaming agent may be a type generally known as a foaming agent for polyvinyl chlorides. Examples of the foaming agent include azodicarbonamide, azobisisobutyronitrile, benzenesulfonyl hydrazide, p-toluenesulfonyl hydrazide, p,p'-oxybis(benzenesulfonyl hydrazide), dinitrosopentamethylenetetramine, N,N'-dinitroso-N,N'-dimethylterephthalamide and trihydrazinotriamine. These foaming agents may be used alone or in combination of two or more thereof.

The paste PVC, when used for the foam layer, may be blended with other ingredients such as a pigment, a diluent, an inorganic filler, a heat stabilizer, a viscosity modifier, a coloring agent and a flame retardant.

The foam layer can be either a closed cell foam layer or an open cell foam layer. Among others, preferred is a closed cell foam layer with uniform cells with a view to obtaining synthetic leather with good balance between touch and durability. Further, the expansion ratio of the foam layer is preferably 2 to 10 times, more preferably 3 to 7 times.

The base fabric (sometimes referred to as fabric material) supports the foam layer and further supports the skin layer. The base fabric can be any fabric material (base fabric) commonly used for synthetic leather or artificial leather. As the base fabric, a knitted fabric, a woven fabric and a nonwoven fabric may be mentioned. Examples of the knitted, woven and nonwoven fabrics include those formed from a single type of fibers or blended fibers selected from: synthetic fibers such as polyester, polyamide, polyacrylonitrile and nylon; natural fibers such as cotton and hemp; and regenerated fibers such as rayon and acetate.

A method for producing the synthetic leather according to the present invention can be any method so far as it is capable of producing the synthetic leather with at least the skin layer, the foam layer and the base fabric. For example, there may be mentioned: a method of bonding the skin layer, the foam layer and the base fabric by an adhesive, thermal pressing or the like; and a method of preparing a PVC paste sol for the skin layer and a PVC paste sol for the foam layer by utilizing the properties of the paste PVC, laminating the sol layers and further laminating the base fabric, followed by heating to cause resinification and foaming.

The PVC paste sol for the skin layer and the PVC paste sol for the foam layer can be each prepared by uniformly mixing the paste PVC with a plasticizer and optionally a foaming agent and the other ingredients by the use of, for example, a planetary mixer, a kneader, a triple roll mill, a Hobart mixer, a butterfly mixer, a dissolver, an automated mortar, a ribbon blender, a Henschel mixer or the like. The prepared sol can be formed into a given shape by, for example, spreading and applying the sol onto a releasable paper by means of a doctor blade, a reverse roll coater, a natural roll coater, a floating knife coater, an air knife coater, a curtain flow coater or the like, or spraying the sol by means of a sprayer or the like.

The synthetic leather according to the present invention has excellent flexibility and touch and thus can be used for applications in a wide range of fields, including: automotive interiors such as seats, dashboards, instrument panels, door panels, roof panels and console boxes; furniture such as sofas, chests and cabinets; business bags, handbags and other bags and pouches; footwear such as shoes and sandals; clothing such as jackets, coats and jumpers; and stationery.

EXAMPLES

The present invention will be described in further detail below with reference to Examples and Comparative Examples. It should however be understood that the present invention is by no means restricted to the following Examples.

Here, evaluation and measurement methods in Examples will be described below.

<Evaluation of Flexibility>

The flexibility of synthetic leather obtained in each of Examples and Comparative Examples was evaluated based on the sense of touch by arbitrarily selected multiple individuals.

○: The synthetic leather felt soft to the touch when grasped.
×: The synthetic leather felt hard to the touch when grasped.

<Average Polymerization Degree>

The average polymerization degree was determined in accordance with JIS K6721.

<Average Vinyl Acetate Residue Unit Content>

The average vinyl acetate residue unit content (sometimes referred to as VAc content) (wt%) in a vinyl chloride-vinyl acetate copolymer paste resin was determined according to the following formula by mixing 100 mg of vinyl chloride-vinyl acetate copolymer particles and 10 mg of potassium bromide, grinding and forming the resulting mixture into a measurement sample, and then, measuring the measurement sample with an infrared spectrophotometer (FTIR-8100A (product name) manufactured by Shimadzu Corporation).

$$\text{VAc content} = (3.73 \times B/A + 0.024) \times 1.04$$

A: Abs. value of absorption peak top due to C-H in-plane bending, observed at around 1430 cm$^{-1}$
B: Abs. value of absorption peak top due to C=O stretching, observed at around 1740 cm$^{-1}$

<Distribution Measurement of Vinyl Acetate Residue Unit Content>

A distribution of vinyl acetate residue unit content was measured by 2D-HPLC (two-dimensional HPLC).

Equipment: Agilent 1290 Infinity II Series (manufactured by Agilent Technologies)
Detector: Evaporative light-scattering detector (ELSD) G4260B (manufactured by Agilent Technologies)
First-dimension stage (GPEC)
Column: TSKgel ODS-80Ts (manufactured by Tosoh Corporation)
Column temperature: 40°C
Mobile phases:

Solution A: 50% Aqueous MeOH solution
Solution B: Tetrahydrofuran
Flow rate: 0.6 ml/min
Concentration: 1.0 mg/ml
Injection volume: 20 $\mu$l
Second-dimension stage (GPC)
Column: TSKgel SuperAWM-H (manufactured by Tosoh Corporation)
Column temperature: 40°C
Eluent: Tetrahydrofuran
Flow rate: 0.6 ml/min
Loop volume: 40 $\mu$l

<Particle Size Distribution>

Paste PVC for synthetic leather was dispersed in water and subjected to ultrasonic dispersion. The resulting dispersion was analyzed with a disc centrifuge particle size analyzer (DC24000UHR (product name) manufactured by Nihon Rufuto Co., Ltd.) to measure a particle size distribution.

Synthesis Example 1

Into a 1-$m^3$ stainless steel autoclave were charged 360 kg of deionized water, 300 kg of vinyl chloride monomer, 5.7 kg of lauroyl peroxide and 30 kg of a 15 wt% aqueous sodium dodecylbenzenesulfonate solution. The resulting liquid was subjected to homogenization treatment by circulation through a homogenizer for 3 hours. Then, the temperature of the reaction system was raised to 45°C to initiate polymerization. After the pressure of the polymerization system decreased, the unreacted vinyl chloride monomer was recovered. There was thus obtained a polyvinyl chloride seed latex (a) containing 2 wt% of lauroyl peroxide relative to the polyvinyl chloride and having a solid content of 35 wt% and an average particle size of 0.55 $\mu$m.

Synthesis Example 2

Into a 1-$m^3$ stainless steel autoclave were charged 400 kg of deionized water, 300 kg of vinyl chloride monomer, 81 g of potassium persulfate and 10 kg of a 16 wt% aqueous potassium laurate solution. The temperature of the reaction system was raised to 54°C to initiate polymerization. From the initiation of the polymerization until the termination of the polymerization, 0.7 part by weight of a 15 wt% aqueous sodium dodecylbenzenesulfonate solution was added continuously to the vinyl chloride monomer. After the pressure of the polymerization system decreased, the unreacted vinyl chloride monomer was recovered. There was thus obtained a polyvinyl chloride seed latex (b) having a solid content of 40 wt% and an average particle size of 0.15 $\mu$m.

Example 1

Into a 2.5-liter autoclave were charged: 610 g of deionized water; as first-charge monomers, 493 g of vinyl chloride monomer (62 wt% relative to the total charge amount of the mixed monomers) and 96 g of vinyl acetate monomer (12 wt% relative to the total charge amount of the mixed monomers); 9 g of a 5% aqueous sodium lauryl sulfate solution; 85 g of the seed latex (a) having an average particle size of 0.55 $\mu$m obtained in Synthesis Example 1; and 4 g of a 0.1% aqueous copper sulfate solution. The temperature of this reaction mixture was raised to 35°C to initiate first-stage polymerization, and throughout the entire polymerization time, a 0.05 wt% aqueous ascorbic acid solution was continuously added to maintain the polymerization temperature. At the time when the polymerization conversion reached 50%, 140 g of vinyl chloride monomer (17 wt% relative to the total charge amount of the mixed monomers) was charged as a second-charge monomer into the 2.5-liter autoclave to continue second-stage polymerization at a polymerization temperature of 35°C.

At the time when the polymerization conversion reached 80% relative to the total amount of the first- and second-charge monomers, 70 g of vinyl chloride monomer (9 wt% relative to the total charge amount of the mixed monomers) was charged as a third-charge monomer into the 2.5-liter autoclave to continue third-stage polymerization at a polymerization temperature of 35°C. The polymerization was terminated at the time when the polymerization conversion reached 90% relative to the total amount of the mixed monomers.

From the initiation of the polymerization until the termination of the polymerization, 0.7 part by weight of a 5 wt% aqueous sodium lauryl sulfate solution and 0.1 part by weight of an aqueous solution of nonylpropenylphenol-ethylene oxide (10 moles) adduct sulfate ammonium salt (Aqualon BC-1025 (product name) manufactured by DKS Co., Ltd.) were continuously added to the vinyl chloride monomer. With this, a vinyl chloride-vinyl acetate copolymer latex was obtained.

Then, 1 kg of the obtained vinyl chloride-vinyl acetate copolymer latex was spray-dried with a rotary disc-type spray dryer at a hot air temperature of 160°C and an outlet temperature of 60°C, thereby yielding a vinyl chloride-vinyl acetate copolymer paste resin as paste PVC for synthetic leather. The yielded paste PVC for synthetic leather had a vinyl acetate residue unit content of 9.0 wt% and a polymerization degree of 1,900. The measurement results of the vinyl acetate residue unit content distribution and the particle size distribution are shown in Table 1.

Example 2

Into a 2.5-liter autoclave were charged: 610 g of deionized water; as first-charge monomers, 501 g of vinyl chloride monomer (62 wt% relative to the total charge amount of the mixed monomers) and 82 g of vinyl acetate monomer (10 wt% relative to the total charge amount of the mixed monomer); 9 g of a 5% aqueous sodium lauryl sulfate solution; 85 g of the seed latex (a) having an average particle size of 0.55 μm obtained in Synthesis Example 1; and 4 g of a 0.1% aqueous copper sulfate solution. The temperature of this reaction mixture was raised to 40°C to initiate first-stage polymerization, and throughout the entire polymerization time, a 0.05 wt% aqueous ascorbic acid solution was continuously added to maintain the polymerization temperature. At the time when the polymerization conversion reached 73%, 140 g of vinyl chloride monomer (17 wt% relative to the total charge amount of the mixed monomers) was charged as a second-charge monomer into the 2.5-liter autoclave to continue second-stage polymerization at a polymerization temperature of 35°C.

At the time when the polymerization conversion reached 82% relative to the total amount of the first- and second-charge monomers, 70 g of vinyl chloride monomer (9 wt% relative to the total charge amount of the mixed monomers) was charged as a third-charge monomer into the 2.5-liter autoclave to continue third-stage polymerization at a polymerization temperature of 35°C. The polymerization was terminated at the time when the polymerization conversion reached 90% relative to the total amount of the mixed monomers.

From the initiation of the polymerization until the termination of the polymerization, 0.7 part by weight of a 5 wt% aqueous sodium lauryl sulfate solution and 0.1 part by weight of an aqueous solution of nonylpropenylphenol-ethylene oxide (10 moles) adduct sulfate ammonium salt (Aqualon BC-1025 (product name) manufactured by DKS Co., Ltd.) were continuously added to the vinyl chloride monomer. With this, a vinyl chloride-vinyl acetate copolymer latex was obtained.

Then, 1 kg of the obtained vinyl chloride-vinyl acetate copolymer latex was spray-dried with a rotary disc-type spray dryer at a hot air temperature of 160°C and an outlet temperature of 60°C, thereby yielding a vinyl chloride-vinyl acetate copolymer paste resin as paste PVC for synthetic leather. The yielded paste PVC for synthetic leather had a vinyl acetate residue unit content of 6.6 wt% and a polymerization degree of 1,810. The measurement results of the vinyl acetate residue unit content distribution and the particle size distribution are shown in Table 1.

Example 3

Into a 2.5-liter autoclave were charged: 610 g of deionized water; as first-charge monomers, 225 g of vinyl chloride monomer (26 wt% relative to the total charge amount of the mixed monomers) and 51 g of vinyl acetate monomer (6 wt% relative to the total charge amount of the mixed monomer); 9 g of a 5% aqueous sodium dodecylbenzenesulfonate solution; 90 g of the seed latex (a) having an average particle size of 0.55 μm obtained in Synthesis Example 1; and 4 g of a 0.1% aqueous copper sulfate solution. The temperature of this reaction mixture was raised to 47°C to initiate first-stage polymerization, and throughout the entire polymerization time, a 0.05 wt% aqueous ascorbic acid solution was continuously added to maintain the polymerization temperature. At the time when the polymerization conversion reached 85%, 250 g of vinyl chloride monomer (29 wt% relative to the total charge amount of the mixed monomers) was charged as a second-charge monomer into the 2.5-liter autoclave to continue second-stage polymerization at a polymerization temperature of 44°C.

At the time when the polymerization conversion reached 89% relative to the total amount of the first- and second-charge monomers, 331 g of vinyl chloride monomer (39 wt% relative to the total charge amount of the mixed monomers) was charged as a third-charge monomer into the 2.5-liter autoclave to continue third-stage polymerization at a polymerization temperature of 40°C. The polymerization was terminated at the time when the polymerization conversion reached 90% relative to the total amount of the mixed monomers.

From the initiation of the polymerization until the termination of the polymerization, 0.7 part by weight of a 5 wt% aqueous sodium dodecylbenzenesulfonate solution was continuously added to the vinyl chloride monomer. With this, a vinyl chloride-vinyl acetate copolymer latex was obtained.

Then, 1 kg of the obtained vinyl chloride-vinyl acetate copolymer latex was spray-dried with a rotary disc-type spray dryer at a hot air temperature of 160°C and an outlet temperature of 60°C, thereby yielding a vinyl chloride-vinyl acetate copolymer paste resin as paste PVC for synthetic leather. The yielded paste PVC for synthetic leather had a vinyl acetate residue unit content of 4.8 wt% and a polymerization degree of 1,650. The measurement results of the vinyl acetate residue unit content distribution and the particle size distribution are shown in Table 1.

Example 4

Into a 2.5-liter autoclave were charged: 610 g of deionized water; as first-charge monomers, 227 g of vinyl chloride monomer (28 wt% relative to the total charge amount of the mixed monomers) and 41 g of vinyl acetate monomer (5 wt% relative to the total charge amount of the mixed monomers); 9 g of a 5% aqueous sodium dodecylbenzenesulfonate solution; 90 g of the seed latex (a) having an average particle size of 0.55 μm obtained in Synthesis Example 1; and 4 g of a 0.1% aqueous copper sulfate solution. The temperature of this reaction mixture was raised to 58°C to initiate first-stage polymerization, and throughout the entire polymerization time, a 0.05 wt% aqueous ascorbic acid solution was continuously added to maintain the polymerization temperature. At the time when the polymerization conversion reached 86%, 227 g of vinyl chloride monomer (28 wt% with respect to the total charge amount of the mixed monomers) was charged as a second-charge monomer into the 2.5-liter autoclave to continue second-stage polymerization at a polymerization temperature of 55°C.

At the time when the polymerization conversion reached 90% relative to the total amount of the first- and second-charge monomers, 300 g of vinyl chloride monomer (38 wt% relative to the total charge amount of the mixed monomers) was charged as a third-charge monomer into the 2.5-liter autoclave to continue third-stage polymerization at a polymerization temperature of 51°C. The polymerization was terminated at the time when the polymerization conversion reached 90% relative to the total amount of the mixed monomers.

From the initiation of the polymerization until the termination of the polymerization, 0.7 part by weight of a 5 wt% aqueous sodium dodecylbenzenesulfonate solution was continuously added to the vinyl chloride monomer. With this, a vinyl chloride-vinyl acetate copolymer latex was obtained.

Then, 1 kg of the obtained vinyl chloride-vinyl acetate copolymer latex was spray-dried with a rotary disc-type spray dryer at a hot air temperature of 115°C and an outlet temperature of 55°C, thereby yielding a vinyl chloride-vinyl acetate copolymer paste resin as paste PVC for synthetic leather. The yielded paste PVC for synthetic leather had a vinyl acetate residue unit content of 4.0 wt% and a polymerization degree of 1,020. The measurement results of the vinyl acetate residue unit content distribution and the particle size distribution are shown in Table 1.

Synthesis Example 3

Into a 2.5-liter autoclave were charged: 610 g of deionized water; as a first-charge monomer, 420 g of vinyl chloride monomer (60 wt% relative to the total charge amount of the mixed monomer); 8 g of a 5% aqueous sodium lauryl sulfate solution; 85 g of the seed latex (a) having an average particle size of 0.55 μm obtained in Synthesis Example 1; and 4 g of a 0.1% aqueous copper sulfate solution. The temperature of this reaction mixture was raised to 49°C to initiate first-stage polymerization, throughout the entire polymerization time, a 0.05 wt% aqueous ascorbic acid solution was continuously added to maintain the polymerization temperature. At the time when the polymerization conversion reached 88%, 280 g of vinyl chloride monomer (40 wt% relative to the total charge amount of the mixed monomer) was charged as a second-charge monomer into the 2.5-liter autoclave to continue second-stage polymerization at a polymerization temperature of 45°C. The polymerization was terminated at the time when the polymerization conversion reached 90% relative to the total amount of the mixed monomers.

From the initiation of the polymerization until the termination of the polymerization, 0.7 part by weight of a 5 wt% aqueous sodium lauryl sulfate solution was continuously added to the vinyl chloride monomer. With this, a vinyl chloride polymer latex was obtained.

Then, 1 kg of the obtained vinyl chloride polymer latex was spray-dried with a rotary disc-type spray dryer at a hot air temperature of 160°C and an outlet temperature of 60°C to yield a vinyl chloride polymer paste resin. The yielded vinyl chloride polymer paste resin had a polymerization degree of 1,660.

Synthetis Example 4

Into a 2.5-liter autoclave were charged: 610 g of deionized water; 800 g of vinyl chloride monomer, 10 g of a 5 wt% aqueous sodium sulfosuccinate solution; 4 parts by weight of the seed latex (a) having an average particle size of 0.55 $\mu$m obtained in Synthesis Example 1, per 100 parts by weight of the vinyl chloride monomer; and 1 part by weight of the seed latex (b) having an average particle size of 0.15 $\mu$m obtained in Synthesis Example 2, per 100 parts by weight of the vinyl chloride monomer. The temperature of this reaction mixture was raised to 42°C to initiate polymerization. From the initiation of the polymerization until the termination of the polymerization, 0.5 part by weight of a 5 wt% aqueous sodium sulfosuccinate solution was continuously added to the vinyl chloride monomer. The polymerization was terminated at the time when the polymerization temperature decreased from the saturated vapor pressure of the vinyl chloride monomer at 42°C to 0.30 MPa. The unreacted vinyl chloride monomer was recovered. With this, a vinyl chloride polymer latex was obtained.

Then, 1 kg of the obtained vinyl chloride polymer latex was spray-dried with a rotary disc-type spray dryer at a hot air temperature of 160°C and an outlet temperature of 60°C to yield a vinyl chloride polymer paste resin. The yielded vinyl chloride polymer paste resin had a polymerization degree of 2,120.

Synthesis Example 5

Into a 2.5-liter autoclave were charged: 610 g of deionized water; 730 g of vinyl chloride monomer; 15 g of a 5 wt% aqueous sodium dodecylbenzenesulfonate solution; 4 parts by weight of the seed latex (a) having an average particle size of 0.55 $\mu$m obtained in Synthesis Example 1, per 100 parts by weight of the vinyl chloride monomer; and 5 parts by weight of the seed latex (b) having an average particle size of 0.15 $\mu$m obtained in Synthesis Example 2, per 100 parts by weight of the vinyl chloride monomer. The temperature of this reaction mixture was raised to 54°C to initiate polymerization. From the initiation of the polymerization until the termination of the polymerization, 0.7 part by weight of a 5 wt% aqueous sodium lauryl sulfate solution was continuously added to the vinyl chloride monomer. The polymerization was terminated at the time when the polymerization temperature decreased from the saturated vapor pressure of the vinyl chloride monomer at 54°C to 0.35 MPa. The unreacted vinyl chloride monomer was recovered. With this, a vinyl chloride polymer latex was obtained.

Then, 1 kg of the obtained vinyl chloride polymer latex was spray-dried with a rotary disc-type spray dryer at a hot air temperature of 160°C and an outlet temperature of 60°C to yield a vinyl chloride polymer paste resin. In the yielded vinyl chloride polymer paste resin, sodium lauryl sulfate and nonylpropenylphenol-ethylene oxide (10 moles) adduct sulfate ammonium salt were not contained. The yielded vinyl chloride polymer paste resin had a polymerization degree of 1,120. The measurement results of the vinyl acetate residue unit content distribution and the particle size distribution are shown in Table 1.

[Table 1]

| | Example 1 | Example 2 | Example 3 | Example 4 | Synthesis Example 5 |
|---|---|---|---|---|---|
| Distribution of Vinyl Acetate Residue Unit Content | Continuous | Continuous | Continuous | Continuous | Continuous |
| Number of Local Maxima in Distribution | 1 | 1 | 1 | 1 | 1 |
| Mode [wt%] | 10.5 | 8.8 | 3.4 | 3.4 | 0.3 |
| Primary Particle Size at Maximum Peak of Cumulative Weight Frequency | 1.6 $\mu$m | 1.6 $\mu$m | 1.4 $\mu$m | 1.5 $\mu$m | 1.3 $\mu$m |

Example 5

A PCV paste sol for skin layer formation was prepared by kneading 100 parts by weight of the paste PVC for synthetic leather obtained in Example 1 with 60 parts by weight of DINP (manufactured by J-PLUS Co., Ltd.) as a plasticizer and 3 parts by weight of a Ca-Zn composite heat stabilizer (SC-320 (product name) manufactured by ADEKA Corporation) with the use of a dissolver.

A PVC paste sol for foam layer formation was prepared by kneading 100 parts by weight of the paste PVC obtained in Synthesis Example 5 with 100 parts by weight of DINP (manufactured by J-PLUS Co., Ltd.) as a plasticizer, 50 parts by weight of calcium carbonate (NN#500 (product name) manufactured by Nitto Funka Kogyo K.K.), 4 parts by weight of titanium oxide (JR600A (product name) manufactured by TAYCA Co., Ltd.) as a pigment, 5 parts by weight of a foaming agent (AZ ULTRA 1050 (product name) manufactured by Otsuka Chemical Co., Ltd.) and 1.6 parts by weight of a stabilizer (FL103N (product name) manufactured by ADEKA Corporation) with the use of a dissolver.

Onto a releasable paper preheated at 180°C for 5 seconds, the PVC paste sol for skin layer formation was applied at a thickness of 0.2 mm. The resulting coated paper was heated at 180°C for 10 seconds to obtain a base material 1. The PVC paste sol for foam layer formation was applied at a thickness of 0.2 mm onto the base material 1, followed by heating at 200 °C for 6 seconds to obtain a base material 2. A knitted fabric as a base fabric was adhered to the foam layer side of the base material 2. The resulting layered material was subjected to resinification and foaming by heating at 200°C for 90 seconds. By peeling the releasable paper, synthetic leather was obtained in which the foam layer was in the form of a closed cell foam layer.

The evaluation results of the obtained synthetic leather are shown in Table 2. The obtained synthetic leather was flexible and excellent in sense of touch.

Examples 6 to 8

Synthetic leather having a closed cell foam layer as a foam layer was obtained in the same manner as in Example 5 except that the PVC paste sol for skin layer formation was prepared using the paste PVC for synthetic leather obtained in Example 2, 3 or 4 in place of the paste PVC for synthetic leather obtained in Example 1, and then, evaluated.

The evaluation results are shown in Table 2. The obtained synthetic leather was flexible and excellent in sense of touch.

Example 9

Synthetic leather having a closed cell foam layer as a foam layer was obtained in the same manner as in Example 5 except that the PVC paste sol for foam layer formation was prepared using the paste PVC for synthetic leather obtained in Example 1 in place of the paste PVC obtained in Synthesis Example 5, and then, evaluated. The evaluation results are shown in Table 2. The obtained synthetic leather was flexible and excellent in sense of touch.

Example 10

Synthetic leather was obtained in the same manner as in Example 5 except that the amount of the plasticizer in the PVC paste sol for skin layer formation was changed to 80 parts by weight, and then, evaluated. The evaluation results are shown in Table 2. The obtained synthetic leather was flexible and excellent in sense of touch.

Example 11

Synthetic leather was obtained in the same manner as in Example 5 except that the amount of the plasticizer in the PVC paste sol for foam layer formation was changed to 120 parts by weight, and then, evaluated. The evaluation results are shown in Table 2. The obtained synthetic leather was flexible and excellent in sense of touch.

[Table 2]

| | | Example 5 | Example 6 | Example 7 | Example 8 | Example 9 | Example 10 | Example 11 |
|---|---|---|---|---|---|---|---|---|
| Skin Layer | Vinyl Acetate Residue Unit Content [parts by weight] | 9.0 | 7.0 | 4.8 | 4.0 | 9.0 | 9.0 | 9.0 |
| | Average Polymerization Degree | 1,900 | 1,800 | 1,650 | 1,020 | 1,900 | 1,900 | 1,900 |
| | Plasticizer | 60 | 60 | 60 | 60 | 60 | 80 | 60 |

(continued)

| | | Example 5 | Example 6 | Example 7 | Example 8 | Example 9 | Example 10 | Example 11 |
|---|---|---|---|---|---|---|---|---|
| Foam Layer | Vinyl Acetate Residue Unit Content [parts by weight] | 0 | 0 | 0 | 0 | 9.0 | 0 | 0 |
| | Average Poly-merization De-gree | 1,120 | 1,120 | 1,120 | 1,120 | 1,900 | 1,120 | 1,120 |
| | Plasticizer | 100 | 100 | 100 | 100 | 100 | 100 | 120 |
| | | | | | | | | |
| Flexibility | | ○ | ○ | ○ | ○ | ○ | ○ | ○ |

Comparative Examples 1 and 2

Synthetic leather was obtained in the same manner as in Example 5 except, in place of the paste PVC for synthetic leather obtained in Example 1, the vinyl chloride polymer paste resin obtained in Synthesis Example 3 or 4 was used in the sol for skin layer formation, and then, evaluated.
The evaluation results are shown in Table 3. The obtained synthetic leather was low in flexibility and inferior in sense of touch.

Comparative Example 3

Synthetic leather was produced in the same manner as in Example 5 except that: in place of the paste PVC for synthetic leather obtained in Example 1, the vinyl chloride polymer paste resin obtained in Synthesis Example 3 was used in the sol for skin layer formation; and the amount of the plasticizer in the sol for skin layer formation was changed to 80 parts by weight, and then evaluated.
The evaluation results are shown in Table 3. The obtained synthetic leather was low in flexibility and inferior in sense of touch.

Comparative Example 4

Synthetic leather was obtained in the same manner as in Example 5 except that: in place of the paste PVC for synthetic leather obtained in Example 1, the vinyl chloride polymer paste resin obtained in Synthesis Example 3 was used in the sol for skin layer formation; the amount of the plasticizer in the sol for skin layer formation was changed to 80 parts by weight; and the amount of the plasticizer in the sol for foam layer formation was changed to 120 parts by weight, and then evaluated.
The evaluation results are shown in Table 3. The obtained synthetic leather was low in flexibility and inferior in sense of touch.

[Table 3]

| | | Comparative Example 1 | Comparative Example 2 | Comparative Example 3 | Comparative Example 4 |
|---|---|---|---|---|---|
| Skin Layer | Vinyl Acetate Residue Unit Content [parts by weight] | 0 | 0 | 0 | 0 |
| | Average Polymerization Degree | 1,660 | 2,120 | 1,660 | 1,660 |
| | Plasticizer | 60 | 60 | 80 | 80 |

(continued)

| | | Comparative Example 1 | Comparative Example 2 | Comparative Example 3 | Comparative Example 4 |
|---|---|---|---|---|---|
| Foam Layer | Vinyl Acetate Residue Unit Content [parts by weight] | 0 | 0 | 0 | 0 |
| | Average Polymerization Degree | 1,120 | 1,120 | 1,120 | 1,120 |
| | Plasticizer | 100 | 100 | 100 | 120 |
| | | | | | |
| Flexibility | | × | × | × | × |

The entire disclosures of Japanese Patent Application No. 2023-105601 filed on June 28, 2023 and Japanese Patent Application No. 2024-058761 filed on April 1, 2024, including claims, specifications and summaries, are incorporated herein by reference in their entireties.

INDUSTRIAL APPLICABILITY

The paste PVC according to the present invention is capable of providing synthetic leather with excellent flexibility and touch, and the thus-provided synthetic leather is applicable to various industrial works and is extremely high in industrial value.

**Claims**

1.    A polyvinyl chloride paste resin for synthetic leather, which is a vinyl chloride-vinyl acetate copolymer paste resin having a vinyl acetate residue unit content of 3 to 15 wt% and an average polymerization degree of 900 to 2,200.

2.    The polyvinyl chloride paste resin for synthetic leather according to Claim 1, wherein: the vinyl acetate residue unit content shows a continuous distribution with a single local maximum and a mode of 1 to 30 wt%; and a primary particle size of the paste resin at a maximum peak of cumulative weight frequency is 0.1 to 5 $\mu$m.

3.    Synthetic leather containing a vinyl chloride-vinyl acetate copolymer paste resin having a vinyl acetate residue unit content of 3 to 15 wt% and an average polymerization degree of 900 to 2,200.

4.    The synthetic leather according to Claim 3, comprising at least a skin layer, a foam layer and a base fabric, wherein the skin layer and/or the foam layer contains the vinyl chloride-vinyl acetate copolymer paste resin having a vinyl acetate residue unit content of 3 to 15 wt% and an average polymerization degree of 900 to 2,200.

5.    The synthetic leather according to Claim 4, wherein the skin layer contains 40 to 100 parts by weight of a plasticizer per 100 parts by weight of the vinyl chloride-vinyl acetate copolymer paste resin having a vinyl acetate residue unit content of 3 to 15 wt% and an average polymerization degree of 900 to 2,200.

6.    The synthetic leather according to Claim 4, wherein the foam layer contains 50 to 150 parts by weight of a plasticizer per 100 parts by weight of the vinyl chloride-vinyl acetate copolymer paste resin having a vinyl acetate residue unit content of 3 to 15 wt% and an average polymerization degree of 900 to 2,200.

7.    The synthetic leather according to Claim 5 or 6, wherein the plasticizer is at least one type selected from the group consisting of diisononyl phthalate, bis(2-ethylhexyl) terephthalate, diisodecyl phthalate, dibutyl phthalate, (2-ethylhexyl) adipate, diisononyl adipate, tri(2-ethylhexyl) trimellitate and triisodecyl trimellitate.

8.    A method for producing synthetic leather, comprising laminating a skin layer, a foam layer and a base fabric, wherein the skin layer and the foam layer are formed by paste processing in which a polyvinyl chloride paste sol for formation of the skin layer and/or a polyvinyl chloride paste sol for formation of the foam layer contains a vinyl chloride-vinyl acetate copolymer paste resin having a vinyl acetate residue unit content of 3 to 15 wt% and an average polymerization degree of 900 to 2,200 and a plasticizer.

## INTERNATIONAL SEARCH REPORT

| International application No. |
| --- |
| **PCT/JP2024/020019** |

**A. CLASSIFICATION OF SUBJECT MATTER**

*C08F 214/06*(2006.01)i; *C08F 218/08*(2006.01)i; *C08K 5/10*(2006.01)i; *C08L 27/06*(2006.01)i; *D06N 3/06*(2006.01)i
FI: C08F214/06; C08F218/08; C08L27/06; C08K5/10; D06N3/06

According to International Patent Classification (IPC) or to both national classification and IPC

**B. FIELDS SEARCHED**

Minimum documentation searched (classification system followed by classification symbols)

C08F214/00-214/28; C08F218/00-218/18; C08K3/00-13/08; C08L27/00-27/24; D06N3/00-3/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
| --- | --- | --- |
| X | JP 59-187683 A (BANDO CHEMICAL INDUSTRIES, LTD.) 24 October 1984 (1984-10-24) claims, p. 2, upper left column, line 16 to upper right column, line 10, examples | 1, 3-8 |
| Y | | 1-4, 6-8 |
| X | JP 2018-76477 A (TOSOH CORP.) 17 May 2018 (2018-05-17) claims, paragraphs [0002], [0009], examples | 1, 2 |
| Y | | 2 |
| A | | 3-8 |
| Y | JP 63-112775 A (BANDO CHEMICAL INDUSTRIES, LTD.) 17 May 1988 (1988-05-17) claims, p. 3, lower right column, lines 3-19, examples | 1-4, 6-8 |
| A | | 5 |
| Y | JP 6-56915 A (TOSOH CORP.) 01 March 1994 (1994-03-01) paragraphs [0002], [0003] | 2 |

☑ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **01 August 2024** | **13 August 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

EP 4 737 491 A1

**INTERNATIONAL SEARCH REPORT**

| International application No. |
| --- |
| **PCT/JP2024/020019** |

**C.     DOCUMENTS CONSIDERED TO BE RELEVANT**

| Category* | Citation of document, with indication, where appropriate, of the relevant passages | Relevant to claim No. |
| --- | --- | --- |
| A | JP 50-1137 B1 (NIPPON KAYAKU KABUSHIKI KAISHA) 16 January 1975 (1975-01-16) example 1 | 1-8 |

Form PCT/ISA/210 (second sheet) (July 2022)

14

## INTERNATIONAL SEARCH REPORT
### Information on patent family members

| International application No. |
| --- |
| **PCT/JP2024/020019** |

| Patent document cited in search report | | | Publication date (day/month/year) | Patent family member(s) | Publication date (day/month/year) |
| --- | --- | --- | --- | --- | --- |
| JP | 59-187683 | A | 24 October 1984 | (Family: none) | |
| JP | 2018-76477 | A | 17 May 2018 | US 2019/0040170 A1 claims, paragraphs [0002], [0009], examples WO 2017/138518 A1 CN 108699188 A | |
| JP | 63-112775 | A | 17 May 1988 | (Family: none) | |
| JP | 6-56915 | A | 01 March 1994 | (Family: none) | |
| JP | 50-1137 | B1 | 16 January 1975 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H6116875 A
- JP H62281 A

- JP 2023105601 A
- JP 2024058761 A